# EUROPEAN PATENT APPLICATION

(11) **EP 3 632 271 A1**
(43) Date of publication of application: **08.04.2020**
(21) Application number: 18197842.0
(22) Date of filing: 01.10.2018
(51) Int. Cl.: A47J 27/00, A47J 27/62

(54) **COOKING APPLIANCE FOR COOKING WHOLE GRAINS SUCH AS WHOLE GRAIN RICE**

(71) Applicant: Koninklijke Philips N.V., 5656 AG Eindhoven (NL)
(72) Inventor: CHEN, Yun, 5656 AE Eindhoven (NL); JIN, Yafang, 5656 AE Eindhoven (NL); TAN, Jingwei, 5656 AE Eindhoven (NL); XIAO, Weimin, 5656 AE Eindhoven (NL); SU, Guangming (Roger), 5656 AE Eindhoven (NL); LU, Weihua (Lucia), 5656 AE Eindhoven (NL)
(74) Representative: de Haan, Poul Erik

(57) **Abstract**

A cooking appliance for is cooking whole grains (or possibly also mixtures of different types of whole grains or mixtures of whole grains and refined grains). A first input (IN1) receives an indication of whether grains to be cooked have been pre-soaked or not and a second input (IN2) receives an indication of the type of grains to be cooked. A selected cooking profile is selected from a memory based on these inputs. This provides an automated cooking profile selection, to make the cooking process easier for the user.

## Description

### FIELD OF THE INVENTION

The present invention relates to a cooking appliance at least for cooking whole grains such as bran-covered rice, the cooking appliance comprising a cooking chamber for cooking the grains in water; a heating element arrangement thermally coupled to the cooking chamber; a temperature sensor arrangement thermally coupled to the cooking chamber; and a controller adapted to control the heating element arrangement and being responsive to the temperature sensor arrangement.

The present invention further relates to a method of cooking whole grains in such a cooking appliance.

### BACKGROUND OF THE INVENTION

It is well known that bran-covered rice (known as whole grain rice) in which the rice grains still contain their outer bran has significant nutritional benefits over white rice in which the bran layer and germ part have been removed, e.g. through polishing, in order to expose the core of the rice grain formed of endosperm cells that mainly consist of starch and protein. Such whole grain rice, e.g. brown rice, black rice, red rice and so on, typically has a much higher degree of dietary fiber, vitamin B family, minerals and so on and is therefore often considered a healthier alternative to white rice.

There is growing evidence that whole-grain cereal products protect against the development of chronic diseases. The most important of these in terms of public health are obesity, the metabolic syndrome, type 2 diabetes, CVD and cancers.

However, as many people nowadays live busy lives, white rice is often chosen for convenience reasons notwithstanding the inferior nutritional content of white rice compared to whole grain rice varieties due to the fact that white rice can be prepared much faster than whole grain rice alternatives. Whole grains typically require a period of soaking prior to cooking the rice in order to allow water to penetrate to the inside endosperm part from the outer bran layer such that the inner core of the rice grains can be fully gelatinized, i.e. cooked, more quickly.

By way of example, the table below identifies different types of grains as well as typical recommended cooking times and quantities of water.

| **1 cup of grains** | **Water** | **Cooking time** | **Yield** |
|---|---|---|---|
| Amaranth | 2 cups | 15-20 minutes | 2 ½ cups |
| Barley, hulled | 3 cups | 45-60 minutes | 3 ½ cups |
| Buckwheat | 2 cups | 20 minutes | 4 cups |
| Bulgur | 2 cups | 10-12 minutes | 3 cups |
| Farro | 2 ½ cups | 25-40 minutes | 3 cups |
| Kamut wheat | 4 cups | Soaking overnight then 45-60 minutes | 3 cups |
| Millet, hulled | 2 ½ cups | 25-35 minutes | 4 cups |
| Oats, rolled | 2 ½ cups | 15 minutes | 3 ½ cups |
| Oats, whole | 3 cups | 1 hour | 3 ½ cups |
| Quinoa | 2 cups | 12-15 minutes | 3 cups |
| Rice, brown long | 1 ½ cups | 45 minutes | 3 cups |
| Rice, brown short | 2 cups | 55 minutes | 3 cups |
| Rice, wild | 2 ½ cups | 50 minutes | 4 cups |
| Rye | 4 cups | Soaking overnight then 45-60 minutes | 3 cups |
| Sorghum | 4 cups | 25-40 minutes | 3 cups |
| Spelt | 4 cups | Soaking overnight then 45-60 minutes | 3 cups |
| Teff | 3 cups | 20 minutes | 2 ½ cups |
| Triticale | 3 ½ cups | 1 hour 20 minutes | 3 cups |

To further facilitate the preparation of rice, domestic cooking appliances, e.g. rice cookers, are available. For example, some known rice cookers have a number of cooking programs including a cooking program for brown rice that has an increased water absorption time to improve the cooking of the brown rice.

However, there are many different types of grain with different cooking profiles, as shown above. This complicates the cooking of whole grain rice for the user.

It would be desirable for a cooking appliance to be able to perform a suitable cooking profile without requiring significant input from a user.

### SUMMARY OF THE INVENTION

The invention is defined by the claims.

According to examples in accordance with an aspect of the invention, there is provided a cooking appliance for cooking whole grains, the cooking appliance comprising:
a cooking chamber for cooking the grains in water;
a heating element arrangement thermally coupled to the cooking chamber;
a temperature sensor arrangement thermally coupled to the cooking chamber;
a memory which stores cooking profiles for different types of grain and for pre-soaked and non-pre-soaked conditions of those different types of grain;
a first input for receiving an indication of whether grains to be cooked have been pre-soaked or not;
a second input for receiving an indication of the type of grains to be cooked; and
a controller adapted to control the heating element arrangement, responsive to the temperature sensor arrangement, to implement a selected cooking profile from the memory which depends on the indications received at the first and second inputs.

This cooking apparatus is able to provide an optimum cooking profile for cooking whole grains. The cooking profile is typically a temperature-time profile, and it is tailored to the particular grains being cooked as well as taking account of whether or not the grains have been pre-soaked.

The first and second inputs may be received from outside the cooking appliance e.g. as external user input, or they may be generated internally based on sensor readings.

The indication of the type of grains may be an indication of multiple types of grain which have been mixed and the controller is adapted to implement a cooking profile which further depends on multiple types of grains mixed, or mixed whole grains and refined grains.

The appliance may thus tailor the cooking profile for multiple types of grains mixed, or for mixed whole grains and refined grains (such as white rice).

The first input preferably comprises a user input. A user is able to identify whether pre-soaking has been carried out with a simply binary input. The first input may instead be for receiving an indication of a type of pre-soaking from a range of possible pre-soaking types.

The cooking appliance may in this way take into account different pre-soaking methods, such as the temperature of soaking (e.g. room temperature or freezer temperature) and the soaking time.

The second input may also comprise a user input. A user is able to identify the types of grain using a user interface, which may be a wireless connection to a user portable device or it may be a manual user input such as using a touch screen. The user may input information about multiple grains and proportions of different grain types as well.

Instead of (or as well as) having a user input for grain type, there may be a camera for capturing an image of a grain and an image processing system for identifying the type of grain, and providing said identification as the second input.

In this way, the cooking appliance may automatically identify a type of grain using image analysis. When both a camera is provided as well as a direct user input, the user can choose whether to provide the required information to the system or to make use of the automated system using the camera.

The image processing system maybe further for identifying multiple types of grain, and for determining the proportions of the different types of grain.

Often, users choose to mix different grains, such as some whole grains and some refined grains. A mixture is used to find a balance between taste and dietary fiber content. The proportion information may be used to control the selection of a suitable cooking profile, but it may also be used to monitor the user's intake of whole grains.

The cooking appliance may comprise a weight sensor, wherein the controller is further adapted to control the heating element arrangement in response to a measured weight of the grains to be cooked.

The weight may be used to control the cooking process, but it also enables an evaluation of nutritional content. Based on identified proportions, the total weight may be divided between the different grain types which are present when there are multiple grain types present. This may enable a more suitable cooking profile to be obtained.

The weight information may also be used to monitor intake quantities.

When the cooking appliance has a weight sensor, the controller may be further adapted to determine an amount of water to be added.

The amount of water to be added may also take into account different combinations of grain types.

The controller may be adapted to implement:
a cooking profile for non-pre-soaked grains with a first temperature for a first time period and a second, higher, temperature for a second subsequent time period; and/or
a cooking profile for pre-soaked grains with a single temperature.

A two-stage cooking process is most effective for non-pre-soaked whole grains whereas a one-stage cooking process is most effective for pre-soaked whole grains.

The controller may be further adapted to derive nutritional information in respect of the grains and provide the nutritional information as output. The cooking apparatus may use all the input indications, as well as weight information when available, to derive nutrition information.

The cooking apparatus may further comprise a wireless communications module for receiving user input wirelessly from a portable device of the user. This provides a user-friendly experience for the user and it means the cooing apparatus itself can be kept to a low cost.

The cooking apparatus is preferably a rice cooker.

The invention also provides a cooking method for cooking whole grains in water using a cooking apparatus, comprising:
receiving at the cooking apparatus an indication of the type of grains to be cooked;
receiving at the cooking apparatus an indication of whether grains to be cooked have been pre-soaked or not; and
automatically controlling the cooking apparatus to implement a cooking profile which is selected from a memory of the cooking apparatus in dependence on the indications received.

Receiving an indication of whether the grains to be cooked have been pre-soaked or not may be based on user input to the cooking apparatus, and receiving an indication of the type of grains to be cooked may either be based on user input to the cooking apparatus or based on image analysis.

The cooking appliance may in this way take into account different pre-soaking methods, such as the temperature of soaking (e.g. room temperature or freezer temperature) and the soaking time.

The method may comprise:
implementing a cooking temperature profile for non-pre-soaked grains with a first temperature for a first time period and a second, higher, temperature for a second subsequent time period; and
implementing a temperature profile for pre-soaked grains with a single temperature.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 schematically depicts a cross-sectional view of a first example of a cooking appliance according to the present invention;
Figure 2 schematically depicts a cross-sectional view of a second example of a cooking appliance according to the present invention;
Figure 3 shows an example of a cooking profile for one type whole grains which have not been pre-soaked;
Figure 4 shows an example of a cooking profile for a different type of whole grains which have not been pre-soaked;
Figure 5 shows an example of a cooking profile for one type of whole grains which have been pre-soaked; and
Figure 6 shows a cooking method for cooking whole grains in water using a cooking apparatus.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a cooking appliance for cooking whole grains (or possibly also mixtures of different types of whole grains or mixtures of whole grains and refined grains). A first input receives an indication of whether grains to be cooked have been pre-soaked or not and a second input receives an indication of the type of grains to be cooked. A selected cooking profile is selected from a memory based on these inputs. This provides an automated cooking profile selection, to make the cooking process easier for the user.

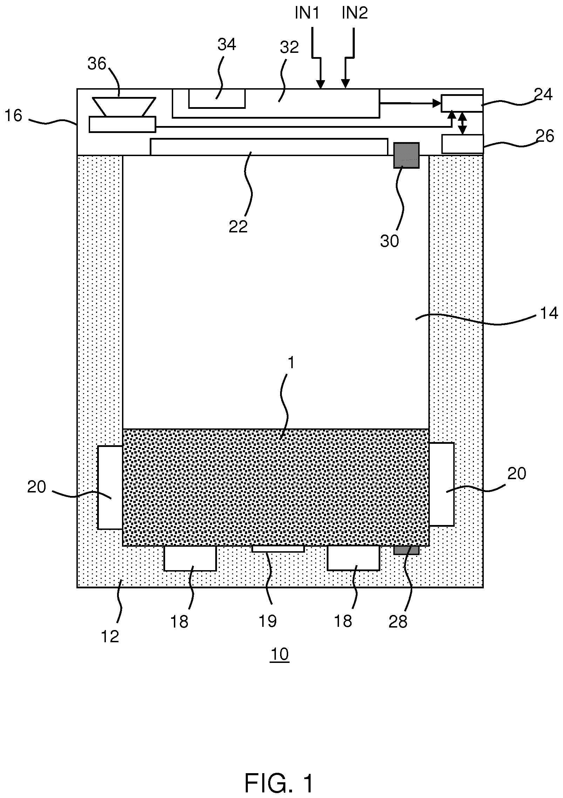

Figure 1 schematically depicts a cross-sectional view of an embodiment of a cooking appliance 10 according to the present invention. The cooking appliance 10 preferably is a domestic cooking appliance, e.g. a rice cooker or a multi-food cooker, although embodiments of the present invention are not limited to domestic (kitchen) appliances. The cooking appliance 10 comprises a housing 12, which maybe made in any suitable shape using any suitable materials, e.g. metal, metal alloy, plastics and combinations thereof, in which a cooking chamber 14 is located. The cooking appliance 10 may further comprise a lid 16 arranged on the housing 12 in any suitable manner, e.g. a lid 16 that may be removable or a lid 16 that is attached to the housing 12 through one or more hinges. The lid 16 is arranged to seal the cooking chamber 14. Such a seal may be a hermetic seal, which for example is desirable when the cooking appliance 10 may cook a food product such as rice under increased pressure, i.e. a pressure higher than ambient pressure. Alternatively, such a seal may not be hermetic, for instance because the lid 16 comprises one or more vents that may be adjustable, such that the pressure within the cooking chamber 14 remains in equilibrium with ambient pressure.

The cooking appliance 10 typically further comprises one or more heating elements for heating the food product in the cooking chamber 14. For example, the cooking appliance 10 may comprise at least one of a heating element 18 in a floor of the cooking chamber 14, a heating element 20 in a sidewall of the cooking chamber 14 and a heating element 22 in the lid 16 of the cooking appliance 10. Any suitable arrangement of such heating elements may be contemplated, and any suitable type of heating element may be used for this purpose.

A weighing scale 19 is also provided at the floor of the cooking chamber.

The heating elements are typically controlled by a controller 24, which may take any suitable shape, e.g. a micro-processor or the like and may be located in any suitable location within the cooking appliance 10, such as in the lid 16. It is noted for the avoidance of doubt that the connections between the one or more heating elements 18, 20, 22 and the weighing scale, and the controller 24, are not shown in the figures for the sake of clarity only. The controller 24 is arranged to control the one or more heating elements in accordance with a cooking program for a particular food product, which is retrieved by the controller 24 from a data storage device 26 which may form part of the cooking appliance 10 or maybe accessible over a data communication network to which the cooking appliance 10 is connected. For example, the controller 24 may be adapted to keep the food product in the cooking chamber 14 at a constant temperature for a period of time as defined in the cooking program and operate the one or more heating elements accordingly.

To this end, the cooking appliance further comprises one or more temperature sensors that are communicatively coupled to the controller 24 and that are arranged to sense the temperature of the food product in the cooking chamber 14 such that the controller 24 can operate the one or more heating elements 18, 20, 22 in accordance with the temperature feedback provided by the one or more temperature sensors.

The temperature sensors maybe located in any suitable location within the cooking appliance 10. For example, a temperature sensor 28 may be located in the floor of the cooking appliance 10 or a temperature sensor 30 may be located in the lid 16 of the cooking appliance 10. Other suitable locations of such a temperature sensors will be immediately apparent to the skilled person. It is noted for the avoidance of doubt that the connections between the one or more temperature sensors 28, 30 and the controller 24 are not shown in the figures of the present application for the sake of clarity only.

In one preferred arrangement, there are two temperature sensors, one is positioned at the top lid of the cooker 16 (recording a "top temperature"), and another is positioned at the bottom of the cooker (recording a "bottom temperature").

In the embodiment shown in Figure 1, the cooking appliance 10 further comprises a user interface 32 communicatively coupled to the controller 24 through which a user may control the operation of the cooking appliance 10. The user interface 32 may be located in any suitable location within the cooking appliance 10, such as in the lid 16. For example, as previously mentioned, the cooking appliance 10 is operable to perform a plurality of cooking programs such as cooking programs that are optimized for a particular type of grain type, in which case a user may select the appropriate cooking program using the user interface 32. Such a cooking program maybe configurable, in which case the user may also use the user interface 32 to provide the configuration information for a selected cooking program.

For example, where the cooking programs include a program for cooking rice, the user may be able to specify the desired firmness and/or stickiness of the rice to be cooked through the user interface 32, as is well-known per se.

Such configuration information may be used by the controller 24 to adjust the cooking program of the selected food product e.g. grains accordingly, e.g. by adjusting the cooking time of the food product as is also well-known per se. Many other examples of such food program configurability for many different types of food will be immediately apparent to the skilled person and are therefore not explained in further detail for the sake of brevity only.

The user interface 32 may take any suitable form. For example, the user interface 32 may include a display 34 under control of the controller 24 through which the various menu options that a user can select are presented through the user. Such a display 34 may be a touchscreen display in which case the user may select a particular menu option by touching the touchscreen display. Alternatively, the user interface 32 may further comprise an arrangement of buttons, dials or the like, which may be used to make such menu option selections as displayed on the display 34 or in the absence of a display 34. Many other suitable embodiments of such a user interface 32 will be immediately apparent to the skilled person.

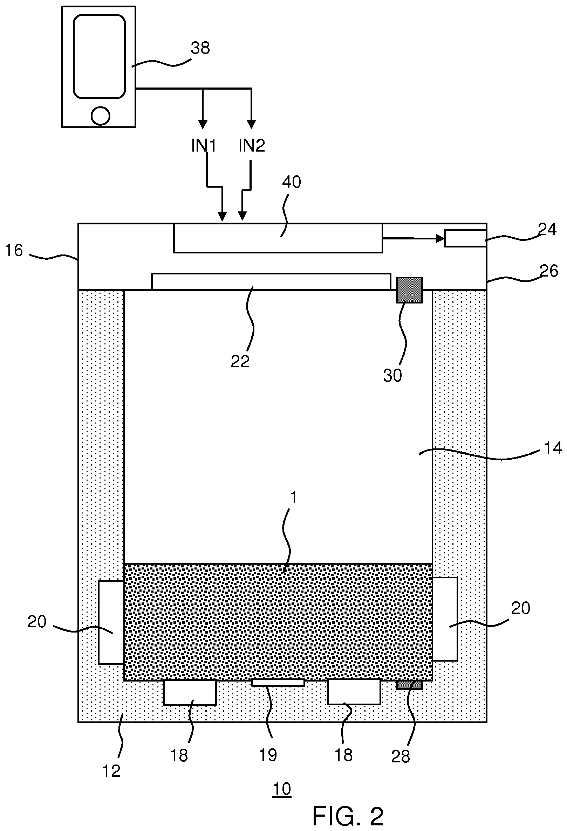

In Figure 1, the user interface 32 is integrated in the cooking appliance 10. However, in an alternative embodiment, which is schematically depicted by the cross-sectional view in Figure 2, an external device 38 may comprise the user interface, in which case the cooking appliance 10 maybe connected to the external device 38 through a wireless communication interface 40 of the cooking appliance 10 that is communicatively coupled to the controller 24. The wireless communication interface 40 may be located in any suitable location within the cooking appliance 10, such as in the lid 14. The wireless communication interface 40 may be adapted to establish a P2P connection such as an infrared or Bluetooth connection between the cooking appliance 10 and the external device 38 or alternatively the wireless communication interface 40 may be adapted to connect to a wireless network such as Wi-Fi network over which the external device 38 can communicate with the cooking appliance 10.

The external device 3 8 may be dedicated remote control device or an electronic device configured with an app or the like that configures the electronic device to act as the user interface of the cooking appliance 10. Such an electronic device for example may be a smart phone, tablet computer, personal digital assistant, laptop computer, a desktop computer, and so on.

To the extent described above, the features of the cooking appliance are known.

A first, but optional, modification is the addition of a camera 36 as shown in Figure 1, for performing identification of a grain type or multiple grain types.

More fundamentally, the invention makes use of a controller 24 which comprises a first input "IN1" for receiving an indication of whether grains to be cooked have been pre-soaked or not and a second input "IN2" for receiving an indication of the type of grains to be cooked.

With regard to the first input IN1, the user typically inputs manually information on whether there has been grain pre-soaking or not. This may be based on the user interface 32 of the cooking appliance or the external device 38. The first input may be binary input, or it may additionally indicate a type of pre-soaking from a range of possible pre-soaking types, such as the temperature of soaking (e.g. room temperature or freezer temperature) and the soaking time.

With regard to the second input IN2, a first option is for a consumer to directly select the type of whole grain they are using by operating the user interface 32 or the external device 38. The grain type may be brown rice, sorghum, or buckwheat for example. However, the number of different grains that have their own cooking profiles may be much larger, for example including many or all of the examples in the table above.

The camera 36 may instead be used to image one or more grains, then send the signal to the controller which then has a database to enable the type of whole grain to be determined. Both options are shown in Figure 1. The information may instead be provided by the external device 38, either based on use of the camera of that device (such as a smart phone or tablet) or by user selection.

The controller 24 then implements a selected cooking profile from the memory 26 which depends on the indications received at the first and second inputs.

Some examples of possible cooking profiles will now be explained. Different cooking profiles will be used for different grain types and depending on whether or not pre-soaking has taken place.

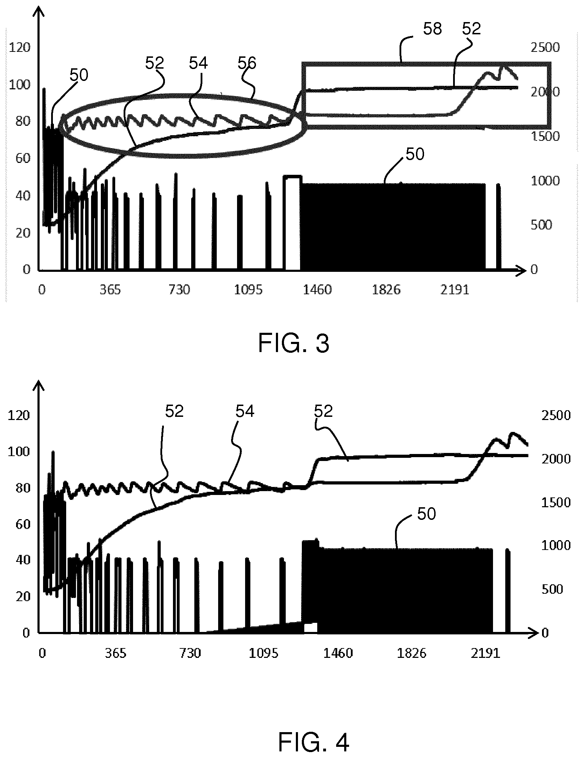

Figure 3 shows an example of a cooking profile for one type of whole grains which have not been pre-soaked. The left y-axis shows temperature in degrees Celsius, the right y-axis shows power in Watts, and the x-axis shows time in seconds.

Plot 50 is the heater power, and is associated with the right y-axis. Plot 52 is the temperature sensed at the lid (the "top temperature") and plot 54 is the temperature sensed at the base (the "bottom temperature").

In a first phase 56, the bottom temperature is regulated to around 80 degrees, and this regulation is achieved by pulsed control of the heating element based on temperature sensing feedback. The heating is by induction, with heating of the water and grains from the bottom and from the surroundings. When the temperature is 80 degrees, the water temperature achieves the same temperature. In the first phase, because the water temperature is below the boiling point, the top temperature is also quite low.

This first phase in this example has a duration of 22 minutes (1320 seconds).

The second phase 58 involves heating to 100 degrees with a increased delivery of heating power. The heating power is for example 900 Watts with a pulsed heating mode with 5 seconds on and 5 seconds off. These pulses cannot be seen in the figure due to the scale of the x-axis. When the water temperature is raised to around 100 degrees, the container is filled with steam, so that the top temperature reaches around 100 degrees.

At the end of the cooking, the bottom surface of the cooker is almost dry and this causes a sharp increase in bottom temperature at the end of the cooking process.

The second phase in this example has a duration of 20 minutes, so the total cooking time is 42 minutes.

The cooking profile is optimized and has a fixed time profile which aims to balance cooking efficiency (speed) and taste.

Figure 4 shows an example of a cooking profile for a different type of whole grains which have not been pre-soaked. The left y-axis shows temperature in degrees Celsius, the right y-axis shows power in Watts, and the x-axis shows time in seconds.

This profile has a shorter first phase of 20 minutes (1200 seconds) but the same second phase duration of 20 minutes, giving a total cooking time of 40 minutes.

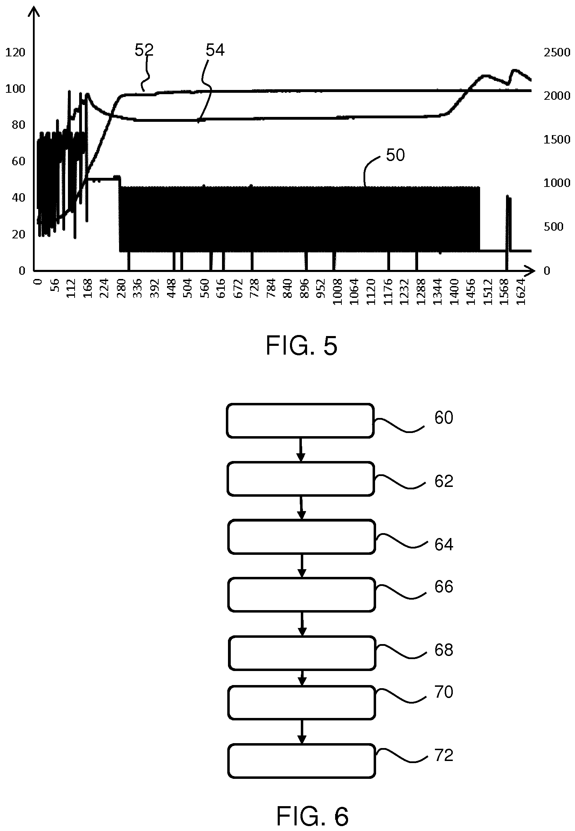

Figure 5 shows an example of a cooking profile for one type of whole grains which have been pre-soaked. The left y-axis again shows temperature in degrees Celsius, the right y-axis shows power in Watts, and the x-axis shows time in seconds.

In this case, a single phase cooking profile is used with a duration of around 27 minutes (1620 seconds).

This cooking apparatus is thus able to provide an optimum cooking profile for cooking whole grains. The cooking profile is a temperature-time profile, and it is tailored to the particular grains being cooked as well as taking account of whether or not the grains have been pre-soaked.

The cooking apparatus as a minimum has cooking profiles for two types of whole grain, and for soaked and non-soaked. However, more preferably, there are cooking profiles for three or more types of whole grain. Examples of different types of whole grain are given above.

The second input IN2 may further receive an indication of multiple types of grain which have been mixed and the controller is adapted to implement a cooking profile which further depends on multiple types of grains mixed, or mixed whole grains and refined grains. The cooking appliance in this way can tailor the cooking profile for multiple types of grains mixed, or for mixed whole grains and refined grains (i.e. white rice).

Often, users choose to mix different grains, such as some whole grains and some refined grains. A mixture is used to find a balance between taste and dietary fiber content.

As for the example of a single grain type, this indication may be manually input by the user or it may be determined based on image analysis. In particular, an image recognition system may be used to capture an image and analyze the color and other image information to distinguish between refined grains (especially white rice) and whole grains.

The weighing scale is for example used to measure the weight of the mixed grains in the cooking device. It is then possible for the controller to determine the proportion and amount of whole grains and refined grains in the mixed grains according to the image analysis and weight information.

This information can be used both to select a most appropriate cooking profile, but also to track the whole grain intake, to enable a user to track their nutritional intake.

The weighing scale measures a weight before cooking and before the addition of water, when the grains are first put into the chamber 14. The cooking appliance then reminds the consumer to add the water to the container, and then record the amount added based on the change in weight. Thus, the appliance can provide feedback about the amount of water added. It can also determine the amount of water needed based on the grain type (or multiple grain types) and the initial dry grain weight. The weighing scale capacity is for example up to 3000 grams, with a precision of 0.1 gram.

The controller can also use a nutrition database or look-up table so that from the type of grain and weight of grains, basic nutritional information may be calculated and estimated, including calories, fiber content, vitamin B content, minerals, etc.

Figure 6 shows a cooking method for cooking whole grains in water using a cooking apparatus. The method comprises:
In step 60 a type of grain is identified, or optionally multiple types of grains, and this information is provided to the cooking appliance. This step may involve the user manually inputting information to the cooking appliance or to an external control device (such as a tablet or phone) or it may involve the user capturing an image of a sample of the grains either using the external device or a camera which forms part of the cooking appliance. This image may be taken after the grains are placed in the cooker, or there may be an image capture area where grains are first placed. Optionally, the grain identification may also provide information of a ratio of different grain types.

In step 62 an indication of whether the grains to be cooked have been pre-soaked or not is provided to the cooking appliance. The cooking appliance may trigger the user to provide this information as part of the control routine implemented by the user interface.

In step 64, an integrated weighing scale performs a weight measurement. If there are multiple grain types, the different weights are then determined.

In step 66, an amount of water required is determined, based on the grain type and soaking information. This information is provided to the user.

In step 68, the addition of water is monitored by tracking a change in weight, so that feedback can be provided to the user.

In step 70, a cooking profile is selected from a memory of the cooking apparatus in dependence on the grain type and soaking information, and cooking is performed according to the profile. A cooking profile for non-pre-soaked grains typically have a first temperature for a first time period and a second, higher, temperature for a second subsequent time period. A cooking profile for pre-soaked grains typically have a single temperature.

In step 72, nutritional information is provided to the user relating to the properties of the cooked grains.

The optimization enabled by differentiating between grain types and soaking conditions enables a shortening of the cooking process. For example, the three profiles described above have durations of 27 minutes, 40 minutes and 42 minutes. These are shorter than the cooking profiles of conventional rice cookers for the same types of rice.

The invention is of primary interest for a rice cooker. However, a multifunctional cooker may include a rice cooking function as well as cooking functions for other (grain and non-grain) food products.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A cooking appliance for cooking whole grains, the cooking appliance comprising:
a cooking chamber (14) for cooking the grains in water;
a heating element arrangement (18, 20, 22) thermally coupled to the cooking chamber;
a temperature sensor arrangement (28, 30) thermally coupled to the cooking chamber;
a memory (26) which stores cooking profiles for different types of grain and for pre-soaked and non-pre-soaked conditions of those different types of grain;
a first input (IN1) for receiving an indication of whether grains to be cooked have been pre-soaked or not;
a second input (IN2) for receiving an indication of the type of grains to be cooked; and
a controller (24) adapted to control the heating element arrangement, responsive to the temperature sensor arrangement, to implement a selected cooking profile from the memory which depends on the indications received at the first and second inputs.

2. A cooking appliance as claimed in claim 1, wherein the indication of the type of grains is an indication of one type of whole grain, multiple types of whole grain mixed, or mixed whole grain and refined grain, and the controller is adapted to implement a cooking profile which further depends on the indication of the type of grains.

3. A cooking appliance as claimed in claim 1 or 2, wherein the first input (IN1) comprises a user input.

4. A cooking appliance as claimed in any one of claims 1 to 3, wherein the second input (IN2) comprises a user input.

5. A cooking appliance as claimed in any one of claims 1 to 4, comprising a camera (36) for capturing an image of a grain and an image processing system for identifying the type of grain, and providing said identification as the second input (IN2).

6. A cooking appliance as claimed in claim 5, wherein the image processing system is further for identifying multiple types of grain, and for determining the proportions of the different types of grain.

7. A cooking appliance as claimed in any one of claims 1 to 6, comprising a weight sensor (19), wherein the controller (24) is further adapted to control the heating element arrangement in response to a measured weight of the grains to be cooked.

8. A cooking appliance as claimed in any one of claims 1 to 7, comprising a weight sensor (19), wherein the controller is further adapted to determine an amount of water to be added.

9. A cooking appliance as claimed in any one of claims 1 to 8, wherein the controller (24) is adapted to implement:
a cooking profile for non-pre-soaked grains with a first temperature for a first time period and a second, higher, temperature for a second subsequent time period; and/or
a cooking profile for pre-soaked grains with a single temperature.

10. A cooking apparatus as claimed in any one of claims 1 to 9, wherein the controller (24) is further adapted to derive nutritional information in respect of the grains and provide the nutritional information as output.

11. A cooking apparatus as claimed in any one of claims 1 to 10, further comprising a wireless communications module (40) for receiving user input wirelessly from a portable device (38) of the user.

12. A cooking apparatus as claimed in any one of claims 1 to 11, comprising a rice cooker.

13. A cooking method for cooking whole grains in water using a cooking apparatus, comprising:
(60) receiving at the cooking apparatus an indication of the type of grains to be cooked;
(62) receiving at the cooking apparatus an indication of whether grains to be cooked have been pre-soaked or not; and
(70) automatically controlling the cooking apparatus to implement a cooking profile which is selected from a memory of the cooking apparatus in dependence on the indications received.

14. A method as claimed in claim 13, comprising:
receiving an indication of whether the grains to be cooked have been pre-soaked or not as user input to the cooking apparatus; and
receiving an indication of the type of grains to be cooked either as user input to the cooking apparatus or based on image analysis.

15. A method as claimed in any one of claims 13 to 14, comprising:
implementing a cooking temperature profile for non-pre-soaked grains with a first temperature for a first time period and a second, higher, temperature for a second subsequent time period; and
implementing a temperature profile for pre-soaked grains with a single temperature.
